# EUROPÄISCHE PATENTANMELDUNG

(11) **EP 0 841 277 A2**
(43) Veröffentlichungstag der Anmeldung: **13.05.1998**
(21) Anmeldenummer: 97119253.9
(22) Anmeldetag: 04.11.1997
(51) Int. Cl.: B65H 57/14

(54) **Vorrichtung zum Führen von strangförmigen Bauteilen, insbesondere Rohren**

(30) Priorität: 07.11.1996 DE 19645832
(71) Anmelder: Hewing GmbH, D-48607 Ochtrup (DE)
(72) Erfinder: Störmann, Michael, 48629 Metelen (DE)
(74) Vertreter: Hilleringmann, Jochen, Dipl.-Ing.

(57) **Zusammenfassung**

Die Vorrichtung zum Führen von strangförmigen Bauteilen, insbesondere Rohren, ist mit einem Parallelogramm (38) versehen, das vier paarweise gegenüberliegende und zueinander parallele Arme (40,42) aufweist, die über Gelenkachsen (44) beweglich miteinander verbunden sind. Ferner weist die Vorrichtung eine Halterungsvorrichtung (34) auf, an der zwei zueinander Parallele Arme (40;42) des Parallelogramms (38) um jeweils mittig zwischen ihren Gelenkachsen (44) angeordnete Drehachsen (46) drehbar gelagert sind. An der Vorrichtung ist eine Verstellvorrichtung (48) zum Verstellen des Parallelogramms (38) angeordnet. An jedem Arm (40,42) ist eine drehbar gelagerte Rolle (64) derart angeordnet, daß sich die Drehachsen (66) der Rollen (64) parallel zu der von den Armen (40,42) aufgespannten Ebene erstrecken und die Drehachsen (66) der Rollen (64) einander gegenüberliegender Arme (40,42) des Parallelogramms (38) zueinander parallel verlaufen.

## Beschreibung

Die Erfindung betrifft eine Vorrichtung zum Führen von strangförmigen Bauteilen, insbesondere Rohren.

Bei der Herstellung von (Kunststoff-) Rohren bzw. allgemein bei der Herstellung von strangförmigen Bauteilen wie extrudierte oder stranggepreßte Profile o.dgl. Bauteile ist es vielfach erforderlich, diese Bauteile zu führen. Hierzu werden Rollen eingesetzt, über die die Bauteile sich bewegen. Aus der Praxis heraus ist es bekannt, für die Führung von extrudierten Kunststoffrohren Rollenvorrichtungen vorzusehen, die mehrere allseitig um das zu führende Rohr herum angeordnete Rollen aufweisen. Diese Rollen sind an radialen Haltearmen befestigt und lassen sich in radialer Richtung verfahren, wodurch die Rollenführung an im Durchmesser unterschiedliche Rohre angepaßt werden kann.

Der Erfindung liegt die Aufgabe zugrunde, eine Vorrichtung zum Führen von strangförmigen Bauteilen, insbesondere Rohren vorzuschlagen, die einen einfachen konstruktiven Aufbau mit einer einfachen Verstellmöglichkeit bei exakt zentrischer Führung des strangförmigen Bauteils aufweist.

Zur Lösung dieser Aufgabe wird mit der Erfindung eine Vorrichtung zum Führen von strangförmigen Bauteilen, insbesondere Rohren vorgeschlagen, die versehen ist mit
- einem Parallelogramm, das vier paarweise gegenüberliegende und zueinander parallele Arme aufweist, die über Gelenkachsen beweglich miteinander verbunden sind,
- einer Halterungsvorrichtung, an der zwei zueinander parallele Arme des Parallelogramms um jeweils mittig zwischen ihren Gelenkachsen angeordnete Drehachsen drehbar gelagert sind, und
- einer Verstellvorrichtung zum Verstellen des Parallelogramms,
- wobei an jedem Arm eine drehbar gelagerte Rolle derart angeordnet ist, daß sich die Drehachsen der Rollen parallel zu der von den Armen aufgespannten Ebene erstrecken und die Drehachsen der Rollen einander gegenüberliegender Arme des Parallelogramms zueinander parallel verlaufen.

Bei der erfindungsgemäßen Vorrichtung sind die Führungsrollen an den vier Armen eines Parallelogramms angeordnet. Die vier Arme sind untereinander über Gelenkachsen beweglich miteinander verbunden, wobei jeweils zwei Armen paarweise gegenüberliegend und zueinander parallel angeordnet sind. Dieses Parallelogramm ist über zwei seiner vier Arme drehbar an einer Halterungsvorrichtung gelagert. Diese beiden zueinander parallelen Arme weise mittig zwischen ihren Gelenkachsen eine Drehachse auf, um die sie an der Halterungsvorrichtung drehbar gelagert sind. Die die beiden Drehachsen verbindende Achse verläuft dabei parallel zu den beiden anderen Armen des Parallelogramms. Über eine Verstellvorrichtung läßt sich das Parallelogramm verschieben, d.h. seine Arme verschwenken, wobei die beiden drehbar an der Halterungsvorrichtung gelagerten Arme um ihre Drehachsen drehen. An jedem Arm des Parallelogramms ist eine Rolle drehbar gehalten, was direkt an dem betreffenden Arm oder indirekt über eine Haltestange o.dgl. Halterung erfolgt. Die Rollen sind derart angeordnet, daß ihre Drehachsen parallel zu der von den Armen des Parallelogramms aufgespannten Ebene verlaufen. Ferner erstrecken sich die Achsen der Rollen einander gegenüberliegender Arme des Parallelogramms zueinander parallel. Sämtliche Achsen der Rollen erstrecken sich ausgehend von den Armen des Parallelogramms einwärts, d.h. sämtliche Rollen liegen innerhalb des Parallelogramms.

Bei der erfindungsgemäßen Vorrichtung begrenzen die vier Rollen einen Durchlaß der Vorrichtung, durch den hindurch sich das zu führende strangförmige Bauteil erstreckt. Die vier Rollen liegen dabei von vier Seiten an dem zu führenden strangförmigen Bauteil an, wobei die vier Rollen das strangförmige Bauteil zwischen sich zentrisch führen. Durch einfaches Verschwenken des an zwei parallelen Armen drehbar gelagerten Parallelogramms bewegen sich die Rollen aufeinander zu bzw. voneinander weg, verändern also den Querschnitt des Durchlasses, wodurch die Vorrichtung an im Querschnitt unterschiedliche strangförmige Profile einfach angepaßt und verstellt werden kann. Die gesamte Konstruktion ist denkbar einfach und funktionszuverlässig, so daß eine exakte zentrische Führung von strangförmigen Bauteilen möglich ist.

Die Drehachsen der Rollen sind vorteilhafterweise federelastisch bewegbar an den Armen des Parallelogramms gelagert, und zwar um Schwenkachsen, die im Kreuzungspunkt der Drehachsen der Rollen mit den Armen des Parallelogramms liegen. Die federelastische Lagerung ist derart ausgelegt, daß die Drehachsen in ihrer Ausgangsstellung rechtwinklig zu den betreffenden Armen des Parallelogramms, an denen sie gelagert sind, verlaufen. Die Drehachsen können federelastisch um die Schwenkachsen oszillieren, was dazu führt, daß die Rollen nachgiebig an dem zu führenden strangförmigen Bauteil anliegen.

In vorteilhafter Weiterbildung der Erfindung ist vorgesehen, daß die Rollen drehbar an Haltestangen gelagert sind, die ihrerseits mit den Armen des Parallelogramms insbesondere schwenkbar verbunden sind. Die Rollen sind nach Art von Walzen ausgebildet (sogenannte Fingerrollen), die an den zum Inneren des Parallelogramms ragenden Enden der Haltestangen gelagert sind.

Ferner ist vorgesehen, daß die Haltestangen, die jeweils an gelenkig miteinander verbundenen Armen des Parallelogramms angeordnet sind, beidseitig dieser Arme angeordnet sind, so daß die Rollen beim Verstellen des Parallelogramms sich aneinander vorbeibewegen können. Damit kollidieren die Bewegungsbahnen benachbarter Rollen des Parallelogramms bei dessen Verschwenkung nicht.

Die federelastische Lagerung der Drehachsen der Rollen ist zweckmäßigerweise derart realisiert, daß zwischen der an einem Arm gelagerten Drehachse bzw. der Haltestange, an der wiederum die Rolle drehbar gelagert ist, und einem fest mit dem Arm verbundenen von der Drehachse bzw. dem Haltearm beabstandeten Widerlager ein Pufferelement aus federelastischem Material, insbesondere Gummi, angeordnet ist, das sich sowohl an der Drehachse bzw. der Haltestange und dem Widerlager abstützt.

Vorzugsweise ist die gesamte Vorrichtung zu einer Diagonalen des Parallelogramms symmetrisch aufgebaut. D.h., daß die Schwenkachsen jeweils zweier gelenkig miteinander verbundener Arme des Parallelogramms den gleichen Abstand zu der diese beiden Arme verbindenden Gelenkachse aufweisen. Ferner ist es von Vorteil, wenn sämtliche Rollen gleich gestaltet sind, so daß sich insofern allseitig des zu führenden strangförmigen Bauteils gleiche konstruktive Verhältnisse einstellen.

Vorzugsweise ist die Verstellvorrichtung als pneumatische oder hydraulische Kolben/Zylindereinheit ausgelegt, die gelenkig sowohl mit dem Parallelogramm als auch mit der das Parallelogramm haltenden Halterungsvorrichtung verbunden ist.

Nachfolgend wird anhand der Figuren ein Ausführungsbeispiel der Erfindung näher erläutert, und zwar am Beispiel einer Vorrichtung, mittels derer sich optisch die Beschaffenheit der auf ein Kunststoffrohr aufgebrachten Diffusionssperrschicht untersuchen läßt. In der Zeichnung zeigen:
- Fig. 1: eine stark schematische Darstellung der Anlage zur Untersuchung eines mit einer Außenbeschichtung versehenen Kunststoffrohres,
- Fig. 2: eine perspektivische Ansicht der mit der erfindungsgemäßen Rollenführung versehenen optischen Inspektionsvorrichtung,
- Fig. 3: eine Ansicht der Rollenführung, wie sie bei der Inspektionsvorrichtung gemäß Fig. 2 eingesetzt wird, wobei die Rollenführung in ihrer Öffnungsposition und ohne von den Rollen geführtem Rohr gezeigt ist, und
- Fign. 4 und 5: zwei Verstellpositionen der Rollenführung zur Führung von Rohren unterschiedlicher Durchmesser.

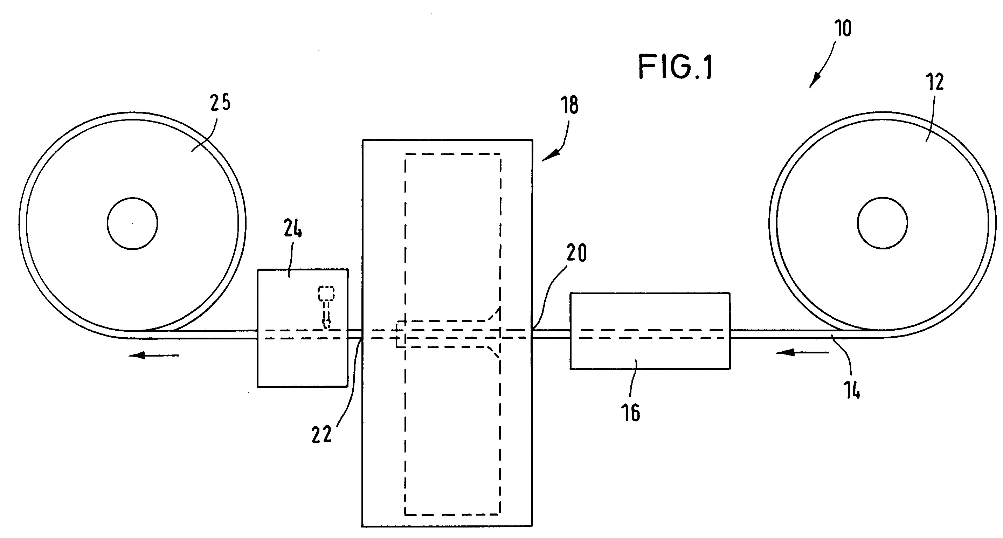

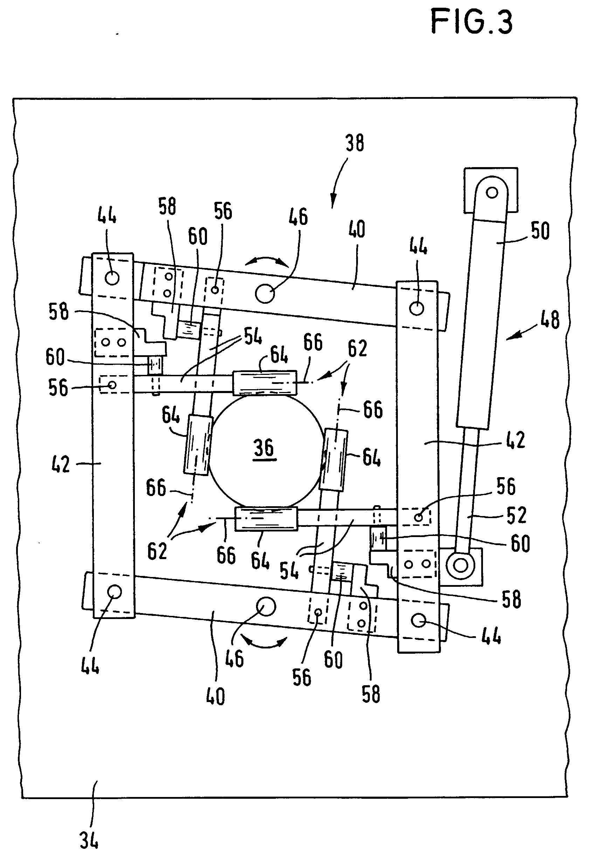

In Fig. 1 ist stark schematisiert eine Anlage 10 zur optischen Inspektion der Diffusionssperrschicht eines Kunststoffrohres dargestellt. Die Anlage 10 weist eine Vorratsspule 12 mit einem noch unbeschichteten Kunststoffrohr 14 auf. Das von der Vorratsspule 12 abgewickelte Kunststoffrohr 14 durchläuft eine bei 16 angedeutete Beschichtungsstation, in der eine beispielsweise EVOH-Diffusionssperrschicht von außen auf das Kunststoffrohr 14 aufgebracht wird. Anschließend wird das Rohr 16 durch eine Vorrichtung 18 hindurch transportiert, in der die EVOH-Diffusionssperrschicht des Kunststoffrohres 14 optisch auf Defekte hin untersucht wird. An ihrem bei 20 angedeuteten Einlaß und ihrem bei 22 angedeuteten Auslaß weist die Vorrichtung 18 eine Rollenführung zum zentrischen Führen des Rohres 14 auf; ein Ausführungsbeispiel einer derartigen Rollenführung ist in den Fign. 3 bis 5 gezeigt und wird anhand dieser Figuren weiter unten näher beschrieben werden. Nachdem das Kunststoffrohr 14 die Vorrichtung 18 durchlaufen hat, wird es an einer Markierungsvorrichtung 24 vorbeibewegt, in der ein in der Vorrichtung 18 als Defekt erkannter Beschichtungsbereich des Kunststoffrohres 14 farblich markiert wird. An die Markierungsvorrichtung 24 schließt sich eine Aufwickelspule 25 an, auf die das Rohr 14 aufgewickelt wird. Aus Gründen der Vereinfachung sind in Fig. 1 Abzugsrollen o.dgl. Transportvorrichtungen zum gleichmäßigen Bewegen des Kunststoffrohres 14 nicht dargestellt.

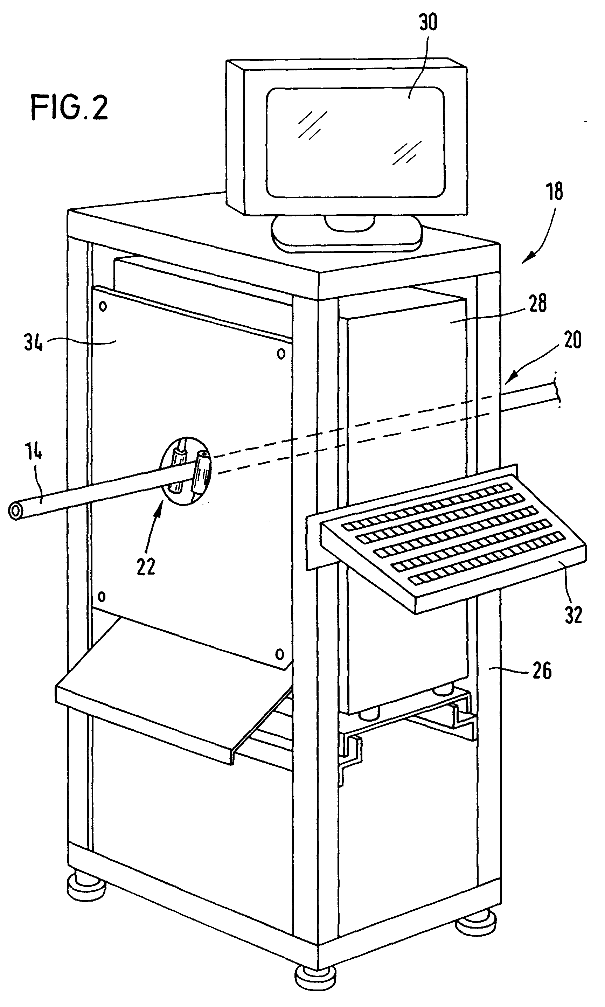

Eine perspektivische Ansicht der Vorrichtung 18 zur optischen Inspizierung der Beschichtung des Kunststoffrohres 14 ist in Fig. 2 gezeigt. Die Vorrichtung 18 weist ein Gestell 26 auf, in dem ein Gehäuse 28 ausziehbar gelagert ist. In dem Gehäuse 28 befinden sich mehrere Laserquellen, deren Laserlicht radial auf die Umfangsfläche des Rohres 14 auftrifft. Von dort wird das Laserlicht reflektiert, um von Detektoren aufgefangen zu werden. Zur optischen Inspektion der Beschichtung des Kunststoffrohres 14 wird das Phänomen ausgenutzt, daß der Winkel, unter dem das Laserlicht reflektiert wird, sich im Falle eines auftretenden Defekts (beispielsweise Riß in der Beschichtung oder aufgeplatzter Beschichtungsbereich) verändert, wodurch bestimmte Detektoren ansprechen, so daß Fehler erkannt und lokalisiert werden können. Zwecks Protokollierung ist die Vorrichtung 18 mit einem Bildschirm 30 versehen; über eine Tastatur 32 lassen sich Daten in die mikroprozessorgesteuerte Vorrichtung 18 eingeben.

Wie anhand von Fig. 2 zu erkennen ist, erstreckt sich das zu untersuchende Kunststoffrohr 14 von zwei einander gegenüberliegenden Seiten durch das Gehäuse 28 hindurch. Außerhalb des Gehäuses 28 befinden sich parallel zu den Eintritts- und Austrittsseiten zwei Platten 34, von denen eine in Fig. 2 gezeigt ist und die jeweils die Rollenführung tragen. In den Fign. 3 bis 5 sind Ansichten auf eine der beiden Halteplatten 34 vom Gehäuse 28 aus gezeigt, um die Rollenführung im einzelnen zu veranschaulichen.

Gemäß der Fign. 3 bis 5 ist jede Halteplatte 34 mit einem zentralen Durchgangsloch 36 versehen, durch das hindurch sich das zu inspizierende Rohr 14 erstreckt. Dieses Durchgangsloch 36 ist mittig innerhalb eines Parallelogramms 38 aus vier paarweise zueinander parallelen Armen 40,42 angeordnet. Die beiden zueinander parallelen Arme 40 sind dabei über die beiden ebenfalls zueinander parallelen Arme 42 gelenkig verbunden, wobei jeweils ein Arm 40 mit einem Arm 42 über Gelenkachsen 44 verbunden sind. Das gesamte Parallelogramm 38 ist um zwei Drehachsen 46 verschwenkbar an der Halteplatte 34 gelagert. Diese beiden Drehachsen 46 sind mittig zwischen den Gelenkachsen 44 der beiden Arme 40 angeordnet, wobei die diese beiden Drehachsen 46 verbindende gedachte Linie parallel zu den Armen 42 verläuft. Die Verschwenkung des Parallelogramms 38 erfolgt mittels einer bei 48 dargestellten pneumatischen bzw. hydraulischen Kolben/Zylindereinheit, deren Zylinder 50 schwenkbar an der Halteplatte 34 gelagert ist und deren Kolbenstange 52 beweglich mit einem der Arme 42 verbunden ist.

An jedem Arm 40,42 des Parallelogramms 38 ist eine Haltestange 54 schwenkbar gelagert, wobei die Schwenkachse 56 parallel zu den Gelenkachsen 44 der Arme 40,42 ausgerichtet ist. Die Haltestangen 54 erstrecken sich ausgehend von den betreffenden Armen 40,42 aus ins Innere des Parallelogramms 38. Der Abstand der beiden Schwenkachsen 56 zweier gelenkig miteinander verbundener Arme 40,42 von deren gemeinsamer Gelenkachse 44 ist gleich.

Zwischen den Schwenkachsen 56 und den Gelenkachsen 44 sind an den Armen 40 und 42 nach innen zum Parallelogramm 38 vorstehende Widerlager 58 starr mit den Armen 40,42 verbunden. Zwischen jedem Widerlager 58 eines Arms 40,42 und der an diesem Arm 40,42 schwenkbar angebrachten Haltestange 54 befindet sich ein Gummipuffer 60 zur federelastischen Lagerung der Haltestange 54 an dem betreffenden Arm 40,42. Die Länge der sich an den Widerlagern 58 und den Haltestangen 54 abstütztenden Gummipuffer 60 ist derart bemessen, daß die Haltestangen 54 ohne von außen wirkende Kräfte in einem Winkel von 90° zu den Armen 40, 42, an denen sie gelagert sind, verlaufen.

Wie in den Fign. 3 bis 5 dargestellt, befinden sich an den den Gelenkachsen 56 abgewandten freien Enden 62 der Haltestangen 54 Rollenkörper 64, die um mit den Längsachsen 66 der Haltestangen 54 zusammenfallende Drehachsen drehbar an den Haltestangen 54 gelagert sind. Die Länge der Haltestangen 54 und die axiale Länge der Rollenkörper 64 ist derart bemessen, daß sämtliche Rollenkörper 64 beim Verschwenken des Parallelogramms 38 eine Bewegungsbahn beschreiben, die durch den Mittelpunkt des Durchgangslochs 36 der Halteplatte 34 führt. Die Rollenkörper 64 stehen kaum über die Haltestangen 54 radial über. Durch die Anlenkung jeweils zweier Haltestangen 54 beidseitig jeweils zweier über eine Gelenkachse 44 miteinander verbundener Arme 40,42 wird erreicht, daß sich die beiden Haltestangen 54 nebst Rollenkörper 64 beim Verschwenken des Parallelogramms 38 aneinander vorbeibewegen lassen. Die Bewegung des Parallelogramms 38 wird also nicht durch Kollision der Rollenkörper 64 bzw. Haltestangen 54 beeinträchtigt.

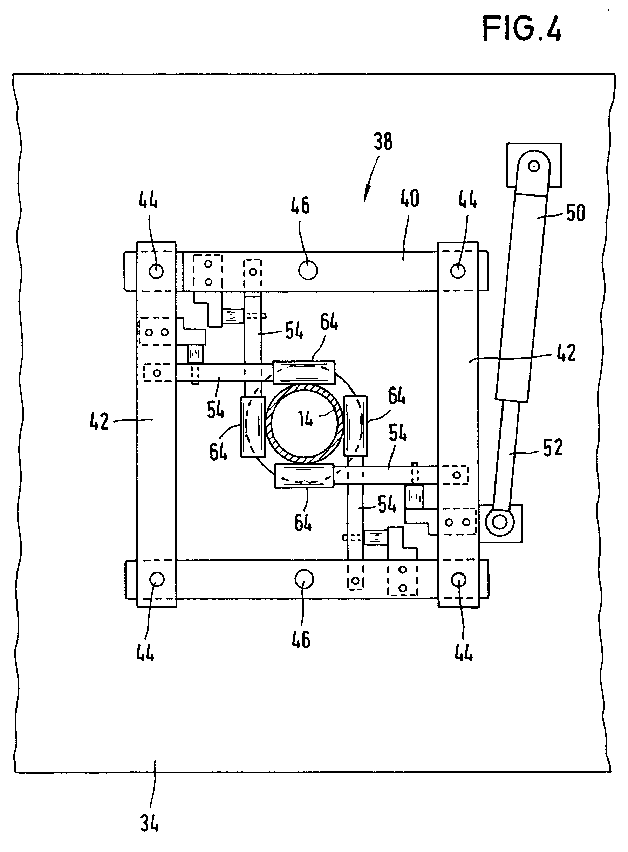

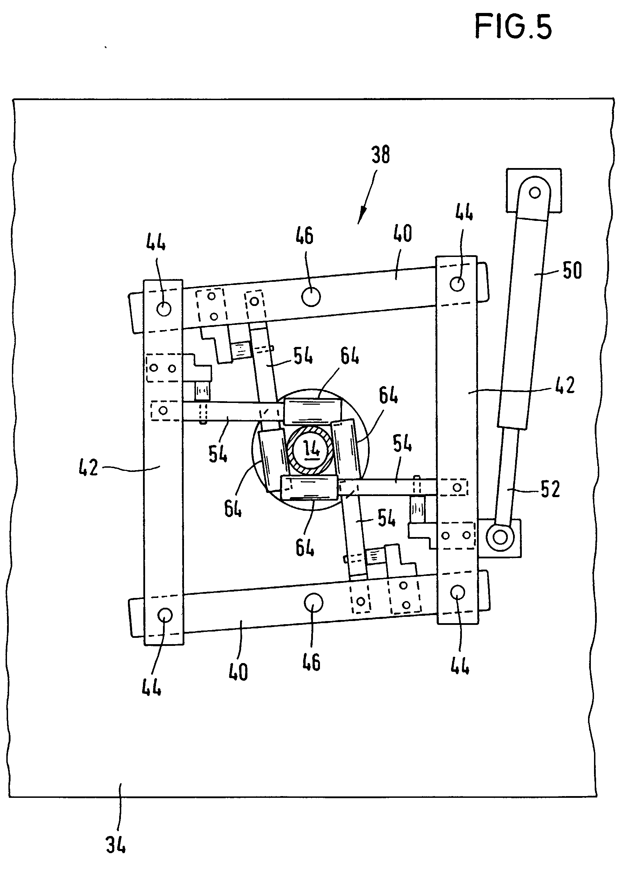

Das vorstehend anhand der Fig. 3 im einzelne erläuterte Rollenführungssystem läßt sich, wie in den Fign. 4 und 5 gezeigt, durch entsprechende Ansteuerung der Kolben/Zylindereinheit 48 an unterschiedliche Durchmesser der zu führenden Rohre 14 leicht anpassen. Fig. 4 beispielsweise zeigt die Situation, in der die Rollenkörper 64 an einem im Durchmesser größeren Rohr 14 anliegen als im Falle der Fig. 5. Die Gummipuffer 60 fangen bei am Rohr 14 anliegenden Rollenkörpern 64 Vibrationen/Stöße zuverlässig auf, so daß das Rohr 14 stets zentrisch zwischen den Rollenkörpern 64 geführt ist.

Mit der hier beschriebenen und in den Figuren dargestellten Rollenführung ist eine exakt zentrische Führung des Rohres 14 durch die Vorrichtung 18 möglich. Dies ist für die Anwendung der Rollenführung bei einem Gerät zur optischen Untersuchung der Beschichtung eines Kunststoffrohres von entscheidender Bedeutung, da sich nämlich das zu inspizierende Rohr 14 in seinem sich jeweils zwischen den am Einlaß 20 und am Auslaß 22 der Vorrichtung 18 befindlichen Rollenführungen erstreckenden Abschnitt exakt in gleichbleibendem Abstand zu den Laserlichtquellen und den Detektoren befinden muß, damit es nicht zu Fehlfunktionen der Vorrichtung 18 kommt. Für die optische Inspizierung des Rohres 14 ist nämlich beispielsweise entscheidend, daß der Abstand der Umfangsfläche des Rohres 14 von sowohl den Laserlichtquellen als auch den Detektoren stets gleich ist. Im Falle der hier beschriebenen Anwendung der Führungsrollen kommt es also ganz entscheidend auf die Beibehaltung der zentrischen Führung des Rohres an. Dies wird gerade durch die Konstruktion gemäß der Fign. 3 bis 5 erreicht.

Ferner läßt sich die hier beschriebene Rollenführung mit einem Inkrementalgeber kombinieren, der die Länge des geführten Rohres mißt. Als Meß- bzw. Laufrolle des Inkrementalgebers kann insbesondere eine der Führungsrollen dienen.

## Patentansprüche

1. Vorrichtung zum Führen von strangförmigen Bauteilen, insbesondere Rohren, mit
- einem Parallelogramm (38), das vier paarweise gegenüberliegende und zueinander parallele Arme (40,42) aufweist, die über Gelenkachsen (44) beweglich miteinander verbunden sind,
- einer Halterungsvorrichtung (34), an der zwei zueinander parallele Arme (40;42) des Parallelogramms (38) um jeweils mittig zwischen ihren Gelenkachsen (44) angeordnete Drehachsen (46) drehbar gelagert sind, und
- einer Verstellvorrichtung (48) zum Verstellen des Parallelogramms (38),
- wobei an jedem Arm (40,42) eine drehbar gelagerte Rolle (64) derart angeordnet ist, daß sich die Drehachsen (66) der Rollen (64) parallel zu der von den Armen (40,42) aufgespannten Ebene erstrecken und die Drehachsen (66) der Rollen (64) einander gegenüberliegender Arme (40,42) des Parallelogramms (38) zueinander parallel verlaufen.

2. Vorrichtung nach Anspruch 1, dadurch gekennzeichnet, daß die Rollen (64) federelastisch bewegbar um Schwenkachsen (56) gelagert sind, die in den Kreuzungspunkten der Drehachsen (66) der Rollen (64) mit den Armen (40,42) des Parallelogramms (38) angeordnet sind und rechtwinklig zu der von dem Parallelogramm (38) aufgespannten Ebene verlaufen.

3. Vorrichtung nach Anspruch 2, dadurch gekennzeichnet, daß die Rollen (64) drehbar an Haltestangen (54) gelagert sind, die an den Armen (40,42) des Parallelogramms (38) gelagert sind.

4. Vorrichtung nach Anspruch 2 und 3, dadurch gekennzeichnet, daß die Haltestangen (54) schwenkbar um die Schwenkachsen (56) an den Armen (40,42) des Parallelogramms (38) gelagert sind.

5. Vorrichtung nach Anspruch 4, dadurch gekennzeichnet, daß pro Arm (40;42) des Parallelogramms (38) zwischen der mit diesem schwenkbar verbundenden Haltestange (54) und einem am Arm (40,42) befindlichen Widerlager (58) ein Pufferelement (60) angeordnet ist, das ein federelastisches Material aufweist.

6. Vorrichtung nach Anspruch 2, dadurch gekennzeichnet, daß die Schwenkachsen (56) jeweils zweier gelenkig miteinander verbundener Arme (40,42) des Parallelogramms (38) den gleichen Abstand zu der diese beiden Arme (40,42) verbindenden Gelenkachse (44) aufweisen.

7. Vorrichtung nach einem der Ansprüche 1 bis 6, dadurch gekennzeichnet, daß sämtliche Rollen (64) den gleichen Abstand zu den Armen (40,42) des Parallelogramms (38), an denen sie jeweil gelagert sind, aufweisen.

8. Vorrichtung nach einem der Ansprüche 1 bis 7, dadurch gekennzeichnet, daß die Verstellvorrichtung (48) eine pneumatische oder hydraulische Kolben/Zylindereinheit ist, die sowohl mit einem der Arme (40;42) des Parallelogramms (38) als auch mit der Halterungsvorrichtung (34) beweglich verbunden ist.
